# EUROPEAN PATENT SPECIFICATION

(11) **EP 0 404 218 B1**
(45) Date of publication and mention of the grant of the patent: **28.07.1993**
(21) Application number: 90201455.4
(22) Date of filing: 07.06.1990
(51) Int. Cl.: G01K 17/04, G01F 1/68

(54) **Integrated semiconductor circuit for thermal measurements**
Integrierte Halbleiterschaltung für thermische Messungen
Circuit intégré à semi-conducteurs pour des mesures thermiques

(30) Priority: 23.06.1989 NL 8901602
(43) Date of publication of application: 27.12.1990
(73) Proprietor: BRONKHORST HIGH-TECH B.V., NL-7261 AK Ruurlo (NL)
(72) Inventor: Huijsing, Johan Hendrik, NL-2636 HD Schipluiden (NL); Riedijk, Frank Robert, NL-2641 RW Pijnacker (NL)
(74) Representative: Flamman, Han

(56) References cited:
- EP-A- 0 170 575
- EP-A- 0 305 072
- EP-A- 0 313 120
- US-A- 4 373 386
- US-A- 4 651 564
- US-A- 4 693 116
- SENSORS AND ACTUATORS, vol. 12, no. 1, July 1987, pages 9-21, Elsevier Sequoia, NL; TONG QIN-YI et al.: "A novel CMOS flow sensor with constant chip temperature (CCT) operation"
- ELECTRONICS LETTERS, vol. 24, no. 9, 28th April 1988, pages 542-543; J.H. HUIJSING et al.: "New integrated gas-flow sensor with duty cycle output"
- SENSORS AND ACTUATORS, vol. 14, no. 3, July 1988, pages 293-303, Elsevier Sequoia, NL; G. STEMME: "A CMOS integrated silicon gas-flow sensor with pulse-modulated output"
- SENSORS AND ACTUATORS, vol. 13, no. 3, March 1988, pages 203-221, Elsevier Sequoia, NL; M. STENBERG et al.: "A silicon sensor for measurement of liquid flow and thickness of fouling biofilms"
- ESSCIRC'86, pages 161-163, Delft, NL; G.C.M. MEIJER et al.: "A three-terminal wide-range temperature transducer with microcomputer interfacing"

## Description

The invention relates to an integrated semiconductor circuit for measurements of thermal signals, comprising at least a comparator having a first input, a second input and an electrical output, and a feedback loop connected between the output and the first input of the comparator.

Such a circuit is known from Sensors and Actuators, Vol.12, No.1, July 1987, pages 9 - 21, in which document an integrated semiconductor circuit for heat flow measurements has been described, comprising a comparator having a first input, a second input and an electrical output, and a feedback loop connected between the output and the first input of the comparator.

In this circuit however the feedback loop, by which the temperature of the circuit is controlled, is an analog one, i.e. the power used to heat up the device is constant and not pulsed. Hence the device does not offer a direct digital output, and therefor cannot be used as a 'smart sensor'. A further disadvantage of the known circuit is its instability when the amplification becomes too large (certainly no comparator can be used) and oscillations will be produced.

In Electronic Letters, Vol.24, No.9, 28.04.1988, pages 542 - 543, a semiconductor circuit has been described, comprising a heating element and a temperature sensor. The power dissipated in the heating element is measured with the help of an integrated amplifier unit with a positive feedback loop, this amplifier however is not integrated on the same circuit that comprises the sensor and the heating element. Because of the existence of a finite transfer time of the heating element and the temperature sensor with a high amplifier gain, the circuit will oscillate. Because of the nearly infinite gain it will not oscillate with a sine wave, but it oscillates between power on and power off states in an undefined way. The frequency of oscillation is controlled by introducing a temperature hysteresis. The circuit produces a duty cycle output, which is not a direct digital signal.

This circuit is theoretically appropriate for measuring physical quantities such as speed of flow, pressure, IR-radiation, or effective value of electrical voltage or current (RMS), the influence of the quantity to be measured on the heat transfer of a heated integrated semiconductor circuit (chip) to its environment being determined in these cases. In these measurements, a signal conversion takes place twice: from the physical (speed of flow, pressure, IR-radiation or RMS value) to the thermal domain, and from the thermal to the electrical domain.

This known circuit cannot be combined with a sample clock, as this could easily interfere with the duty cycle, which would lead to enormous systematical errors. Moreover, the necessary hysteresis, although it can be small, is in conflict with a constant temperature operation.

In US-A 4 693 116 a gas-flow measuring apparatus including a semiconductor chip and a sensing circuit is disclosed. The semiconductor chip includes an electric heater and two temperature-detecting elements. One of the temperature-detecting elements is located closer to the heater than the other. The sensing circuit generates voltage in response to the flow rate of gas flowing through a gas passage. In this apparatus, the response signal is not a digital one, the sensing circuit, on which electrical rather than thermal signals are processed, is not integrated on the semiconductor chip.

In Sensors and Actuators, Vol.14, no.3, 29.04.1988, pages 293-297, like in the above discussed Electronic Letters, Vol.24, no.9, pages 542 - 543, a semiconductor has been described, comprising a heating element and a temperature sensor, located on a chip. The heating of the chip is controlled by a comparator and a Schmitt trigger. Like the circuit described in the latter cited reference, the circuit produces a duty cycle output, which suffers from the above mentioned disadvantage when this circuit should be combined with a sample clock.

Purpose of the invention is to provide an integrated semiconductor circuit for thermal measurements, supplying one or more output signals, appropriate for processing in a micro processor.

This purpose is realized, according to the invention, with a circuit characterized in that the first input and the second input of the comparator are thermal inputs; the output of the comparator is a digital electrical output; the circuit comprises an adder unit for heat currents having an output connected to a heat capacity having a temperature output connected to the first thermal input of the comparator; the feedback loop comprises a digital-analog (DA) signal converter, which provides an analog thermal output, and a gating unit having a first input connected to the output of the comparator, a second input connected to a clock pulse and a digital electric output connected to the input of the digital-analog (DA) converter.

In a circuit according to the invention the measuring accuracy of the circuit is systematically increased, because certain signal processings can take place in the thermal domain, even before signal conversion to the (analog or digital) electric domain (the occurrence of conversion errors connected with that) takes place.

In an embodiment of a circuit according to the invention, the adder unit may comprise means for adding negative heat currents and the DA converter comprises a cooling element.

The advantages of the invention are especially apparent in a circuit in which the signal feedback loop comprises components which, in cooperation with the comparator, form a sigma-delta modulator.

A sigma-delta modulator is a circuit that generally consists of an adder unit, an integrator, a signal-comparator, a clock-controlled flip-flop circuit and a 1-bit DA signal converter.

A sigma-delta modulator, appropriate for the thermal domain, could be constituted by e.g. an adder unit in which two incoming heat currents are added to one outgoing heat current, a heat capacity which acts as an integrator, a thermal signal comparator for two incoming thermal signals and an outgoing electrical signal, a known clock-controlled flip-flop circuit and in the feedback loop a 1 bit thermal DA signal converter, which converts a digital electrical signal into an analog heat flow, which signal is again integrated by the heat capacity. In this way the number of produced pulses is a measure of the heat flow in the device.

The accuracy of a circuit according to the invention, is mainly determined by the accuracy of the DA converter integrated in the circuit and the accuracy of the operation of adding. In such a circuit the inaccuracy which is caused by the conversion of a thermal sensor-signal to an electrical signal eliminated, at least reduced to the inaccuracy of the comparator.

The invention will now be explained further by referring to the drawing.

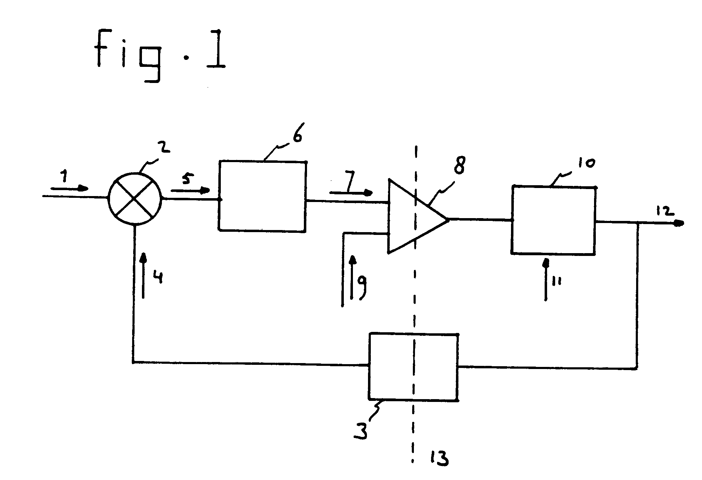

- Fig. 1: shows, as a practical example of the part of a circuit, according to the invention, where the signal coming from the sensor is processed, a sigma-delta modulator, appropriate for signal processing in the thermal domain.

In Fig.1 the arrow 1 denotes a heat current coming from the sensor, which is added in the adder unit 2 with the energy pulse 4 coming from the 1-bit (thermal) DA converter 3. The summed signal (a heat current) 5 is supplied to an integrator 6 (a heat capacity). The signal 7 coming from the integrator (a temperature) is compared, in signal comparator 8, to a reference signal 9 (also a temperature). A gating unit 10 let a clock signal 11 pass to the output as soon as the signal 7 is larger than the reference signal 9. The output signal 12 is fed back via the DA converter 3; as soon as the input signal 1, integrated in integrator 6, exceeds a value (determined by reference signal 9), the DA converter 3 supplies an energy pulse 4. The number of clock pulses 11 that gate 10 let pass is a measure of the signal strength, that is the measured heat current 1. The dotted line 13 schematically denotes the division between the (analog) thermal domain on the left and the (digital) electric domain on the right dotted line 13.

## Claims

1. Integrated semiconductor circuit for measurements of thermal signals, comprising at least a comparator (8) having a first input, a second input and an electrical output, and
a feedback loop connected between the output and the first input of the comparator (8),
characterized in that the first input and the second input of the comparator (8) are thermal inputs;
the output of the comparator (8) is a digital electrical output;
the circuit comprises an adder unit (2) for heat currents having an output connected to a heat capacity (6) having a temperature output connected to the first thermal input of the comparator (8);
the feedback loop comprises a digital-analog (DA) signal converter (3), which provides an analog thermal output, and a gating unit (10) having a first input connected to the output of the comparator (8), a second input connected to a clock pulse and a digital electric output connected to the input of the digital-analog (DA) converter (3).

2. Integrated semiconductor circuit according to claim 1, characterized in that the adder unit (2) comprises means for adding negative heat currents and the DA-converter (3) comprises a cooling element.

## Patentansprüche

1. Integrierte Halbleiterschaltung zur Messung von thermischen Signalen, bestehend aus zumindest einem Komparator (8) mit einem ersten Eingang, einem zweiten Eingang und einem elektrischen Ausgang, und eine Rückkopplungs-Schleife, die den ersten Ausgang mit dem Eingang des Komparators (8) verbindet,
dadurch gekennzeichnet, daß der erste Eingang und der zweite Eingang des Komparators (8) thermische Eingänge sind;
der Ausgang des Komparators (8) ein digitaler elektrischer Ausgang ist; die Schaltung eine Additionseinrichtung (2) für Wärmeströme enthält mit einem Ausgang, der mit einer Wärmekapazität (6) verbunden ist, die ihrerseits einen Temperatur-Ausgang besitzt, der mit dem ersten thermischen Eingang des Komparators (8) verbunden ist;
die Rückkopplungs-Schleife einen digital-analogen (DA) Signalumwandler (3) besitzt, der ein analoges thermisches Ausgangssignal liefert, und eine Torschaltung (10), deren erster Eingang mit dem Ausgang des Komparators (8) und deren zweiter Eingang mit einem Taktgeber verbunden sind, und einen digitalen elektrischen Ausgang besitzt, der mit dem Eingang des digital-analogen (DA) Umwandlers (3) verbunden ist.

2. Integrierte Halbleiterschaltung gemäß Anspruch 1,
dadurch gekennzeichnet, daß die Additionseinrichtung (2) über die Möglichkeit verfügt, negative Wärmeströme hinzuzufügen, und der DA-Umwandler (3) ein Kühlelement besitzt.

## Revendications

1. Un circuit intégré à semi-conducteurs pour mesurer des signaux thermiques, comprenant au moins un comparateur (8) muni d'une première entrée, d'une deuxième entrée et d'une sortie électrique, et une boucle rétroactive connectée entre la sortie et la première entrée du comparateur (8),
caractérisé en ce que la première entrée et la deuxième entrée du comparateur (8) sont des entrées thermiques;
la sortie du comparateur (8) est une sortie digitale électrique;
le circuit comprend une unité d'addition (2) pour des courants de chaleur, avec une sortie connectée à une capacité de chaleur (6) dont la température de sortie est connectée à la première entrée thermique du comparateur (8);
la boucle rétroactive comprend un convertisseur de signal (3) digital-analogue (DA) qui fournit une sortie thermique analogue, et une unité d'entrée (10) possédant une première entrée connectée à la sortie du comparateur (8), une seconde entrée connectée à une pulsation d'horloge et une sortie digitale électrique connectée à l'entrée du convertisseur (3) digital-analogue (DA).

2. Un circuit intégré à semi-conducteurs d'après la revendication 1,
caractérisé en ce que l'unité d'addition (2) comprend des éléments permettant d'ajouter des courants de chaleur négatifs et le convertisseur DA (3) comprend un élément de refroidissement.
